# FASCICULE DE BREVET EUROPEEN

(11) **EP 0 470 901 B1**
(45) Date de publication et mention de la délivrance du brevet: **22.03.1995**
(21) Numéro de dépôt: 91402187.8
(22) Date de dépôt: 05.08.1991
(51) Int. Cl.: B29C 70/30

(54) **Appareillage d'aide au drapage manuel de pièces en matériaux composites**
Hilfsvorrichtung zum manuellen Auflegen von Verbundwerkstoffteilen
Laying-up aid for applying pieces of composite material

(30) Priorité: 08.08.1990 FR 9010120
(43) Date de publication de la demande: 12.02.1992
(73) Titulaire: AEROSPATIALE Société Nationale Industrielle, 75781 Paris Cédex 16 (FR)
(72) Inventeur: Poggi, René Jérôme, F-13100 Aix en Provence (FR)
(74) Mandataire: Dubois-Chabert, Guy

(56) Documents cités:
- EP-A- 0 128 826
- EP-A- 0 165 890
- DE-A- 3 242 949
- IEEE 1986 NATIONAL AEROSPACE AND ELECTRONICS CONFERENCE, NAECON 1986 vol. 2, Mai 1986, DAYTON pages 508 - 511; T. HALL: 'CAD/AI applications for automated manufacturing of composite structures'

## Description

L'invention se rapporte à un appareillage d'assistance et de contrôle du drapage manuel de pièces en matériaux composites.

La technique du drapage consiste à élaborer la structure de pièces telles que des éléments de coques ou de panneaux, en assemblant des découpes de tissus ou de rubans de fibres à grande résistance pré-imprégnés de résine synthétique durcissable, sur la surface d'un outillage de moulage de manière qu'elles se recouvrent partiellement. On procède ensuite à un compactage de ces assemblages puis au durcissement de la résine d'imprégnation des fibres, de façon à unir les découpes constitutives.

Il est ainsi possible de réaliser des pièces de grandes dimensions présentant des formes compliquées, où les fibres de chacune des découpes ont une orientation particulière, choisie pour optimiser la résistance de la pièce.

Il convient de placer sur l'outillage chaque découpe à sa position prévue avec une bonne précision et dans un ordre déterminé. On utilise actuellement des gammes de fabrication et des gabarits, c'est-à-dire des listes d'instructions écrites qui énumèrent les étapes de fabrication et des dessins qui représentent la position de chaque morceau sur l'outillage. La consultation de ces fiches n'est toutefois pas pratique et allonge le temps de fabrication, surtout pour des moyennes ou grandes séries, et il n'est pas possible de contrôler facilement la bonne exécution de chaque dépose.

Il est déjà connu de faciliter la mise en place manuelle des découpes de tissus et de rubans sur l'outillage de moulage par mise en oeuvre d'un faisceau laser piloté par un calculateur et balayant sur l'outillage de dépose le contour de chaque élément à déposer de telle sorte que par rémanence de la vision du spot l'opérateur distingue l'image de la forme extérieure de l'emplacement que doit occuper la découpe déposée. Ce procédé est développé par la société demanderesse dans ses laboratoires et ses usines.

Ce procédé présente cependant des difficultés pratiques d'application en particulier pour obtenir une bonne stabilité de la projection tant en statique qu'en dynamique en raison de la dérive dans le temps des mécanismes commandant les déplacements angulaires du faisceau laser.

Par ailleurs, la projection laser peut provoquer une fatigue des yeux de l'opérateur due au papillotement du faisceau et à l'aspect en pointillé du contour lumineux.

Enfin, la projection accidentelle du faisceau laser dans les yeux de l'opérateur peut se révéler dangereuse et des précautions particulières doivent être prises pour éviter toute possibilité de projection directe.

La présente invention a pour objet un appareillage partiellement automatisé d'aide au personnel chargé du drapage pour accélérer la fabrication et réduire notablement les risques d'erreur, et qui ne présente pas les inconvénients d'utilisation d'un faisceau laser.

L'appareillage suivant l'invention comprend les caractéristiques comme décrites dans la revendication 1. Cette appareillage comprend essentiellement, en plus de l'outillage de dépose, un système de projection d'images vidéo dirigé vers cet outillage et un système de commande apte à faire projeter par le système de projection des images qui indiquent les emplacements exacts où les découpes doivent être successivement déposées avec éventuellement des indications complémentaires schématiques pour faciliter leur mise en place par l'opérateur.

On complète l'appareillage par un dispositif de contrôle du drapage qui vérifie que les découpes successives sont correctement déposées sur l'outillage. Ce dispositif permet plus particulièrement de s'assurer :
- que la texture ou la couleur de la découpe correspond bien à celle du materiau requis ;
- que la forme de la découpe est bonne ;
- que la découpe est déposée au bon emplacement ;
- qu'aucun élément étranger (par exemple un morceau de plastique isolant) n'est inclus sur la surface drapée.

Ce dispositif est constitué d'une part d'une camera dirigée vers l'outillage, reliée au système de commande de projection et apte à discerner la texture, la forme et la position des découpes effectivement posées sur l'outillage, et d'autre part d'un calculateur tel qu'un micro-ordinateur auquel la caméra est reliée et qui est susceptible de comparer les images issues de la caméra avec les images de référence des découpes qu'il a en mémoire, lesquelles ont été constituées soit à partir de prises de vues faites lors d'une opération de fabrication-test, soit à partir de dessins informatisés des découpes. Le dispositif est complété par des écrans de visualisation des images projetées par le système de projection ou recueillies par la caméra.

L'invention va maintenant être décrite plus en détail à l'aide des figures annexées à titre illustratif et non limitatif, dont :
- la figure 1 représente une vue d'ensemble de l'appareillage ;
- la figure 2 est un schéma du système de commande ;
- la figure 3 représente un mode de réglage du système de projection.

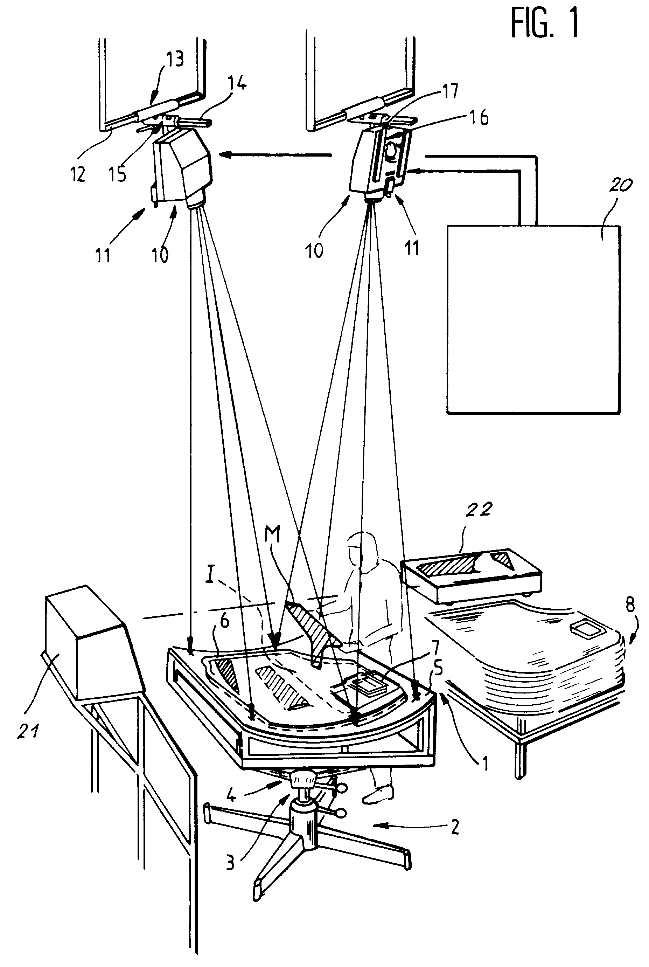

On a représenté sur la figure 1 un outillage 1 de dépose posé sur un établi 2 réglable en hauteur et en orientation grâce à un pied télescopique 3 et à une rotule 4. L'outillage 1 est formé d'une plaque 5 munie d'une collerette 6 qui délimite la forme et le contour de la pièce à réaliser et qui peut comprendre à l'intérieur de cette collerette des reliefs 7 tels que des bossages ou d'autres collerettes pour délimiter des découpes ou des zones de courbures différentes sur la pièce à fabriquer. D'autres outillages de dépose semblables ou non sont posés sur un poste de gabarit de rechange 8, prêts à être posés sur l'établi 2 dès que le drapage de la pièce en cours sera achevé.

L'appareillage comprend un projecteur 10 d'images vidéo et une caméra 11 fixée au projecteur 10. Celui-ci est suspendu au-dessus de l'outillage 1 par l'intermédiaire d'une structure qui comprend une barre fixe 12 horizontale sur laquelle coulisse un curseur 13. Le curseur 13 est équipé d'une barre mobile 14 horizontale et perpendiculaire à la précédente, sur laquelle coulisse un second curseur 15 porteur d'une fourche 16 par l'intermédiaire d'une rotule 17. La rotule 17 permet d'orienter le projecteur 10 et la caméra 11 dans toutes les directions. Par ailleurs, le projecteur 10 est vissé sur la fourche 16 de manière réglable en hauteur. Il est donc possible de régler la position du projecteur 10 et de la caméra 11 suivant toutes les directions.

On a représenté en réalité deux projecteurs 10 et deux caméras 11 suspendus à deux structures distinctes. Une telle disposition peut être envisagée dans le cas d'outillages 1 de grande surface : chaque projecteur 10 et chaque caméra 11 sont alors associés à une moitié de la surface de l'outillage 1. Dans le cas d'outillages encore plus grands, on peut utiliser un nombre plus important de projecteurs 10.

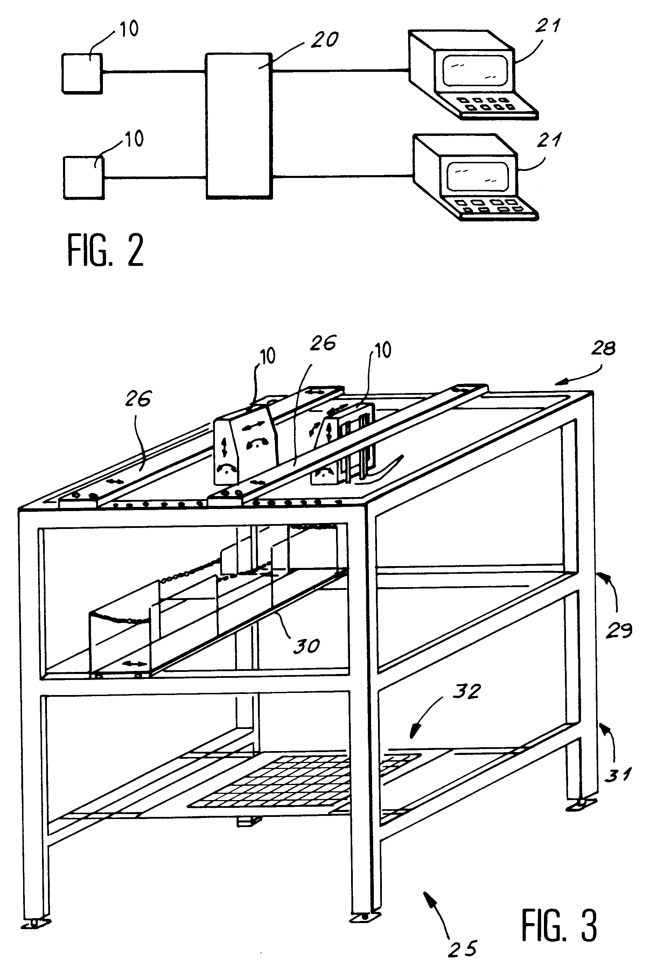

On passe maintenant à la figure 2 en liaison avec la figure 1. Le système de commande de l'appareillage est constitué essentiellement d'un ordinateur 20 relié par des lignes électriques aux projecteurs 10 et aux caméras 11 ainsi qu'à des consoles graphiques 21. On a programmé l'ordinateur 20 pour lui enseigner la forme de chaque outillage 1 ainsi que l'emplacement et la forme des différentes découpes qu'il convient de poser sur cet outillage 1. Avant de poser une découpe, l'opérateur le signale en tapant une instruction sur une console graphique 21. L'ordinateur 20 commande alors les projecteurs 10 pour qu'une image (I sur la figure 1) de la découpe à poser à ce moment soit projetée à l'emplacement correct sur l'outillage 1. Dans le cas de plusieurs projecteurs 10, ceux dont le champ de projection sur l'outillage 1 ne contient aucune portion de l'image ne sont évidemment pas mis en service. La découpe appropriée (M) est alors posée par l'opérateur de façon qu'elle se superpose à l'image projetée. Les caméras 11 vérifient la bonne exécution de cette opération. Pour cela, quand on indique à l'ordinateur 20 qu'on va passer à l'étape suivante, l'image recueillie par les caméras 11 est examinée par l'ordinateur 20 et comparée à l'image qui devrait être trouvée.

Dans la réalisation prévue actuellement par le déposant, on utilise des caméras monochromes recueillant des images carrées de 512 points d'image de côté et qui sont aptes à discerner 250 niveaux de gris ou, plus généralement, de nuances différentes d'une couleur. On compare donc pour chaque point d'image le niveau de gris de référence, obtenu au cours d'une étape d'apprentissage, au niveau de gris obtenu au cours du drapage réel de la pièce sur l'outillage 1. La comparaison peut par exemple comporter quatre étapes qui sont effectuées successivement.

A la première étape, la forme de la découpe qui vient d'être posée est reconnue et comparée à la forme de la découpe à déposer.

Si la comparaison est positive, l'ordinateur 20 compare, par leurs coordonnées sur l'image, l'emplacement de pose de la découpe à l'emplacement prévu.

Une comparaison du niveau de gris global de la découpe posée est alors entreprise. Si par exemple la découpe posée apparaît trop claire, on peut ainsi détecter que la feuille protectrice de polyéthylène qui recouvre ordinairement les découpes n'a pas été retirée.

Enfin, la comparaison du niveau de gris est effectuée localement, pour chaque point d'image, afin de repérer d'éventuelles parcelles résiduelles du polyéthylène ou d'autres irrégularités locales sur la découpe.

Si aucune erreur n'est relevée, l'ordinateur 20 projette l'image de la découpe suivante quand l'opérateur le demande. Sinon, un message d'erreur est affiché sur les consoles graphiques 21 en fonction des résultats des diverses comparaisons, et le fonctionnement des projecteurs 10 est bloqué juqu'à ce que l'erreur soit corrigée.

D'autres indications peuvent également apparaître sur les consoles graphiques 21 si la programmation de l'ordinateur 20 le permet. Il est en particulier possible de visualiser sur leurs écrans l'image de l'outillage et des emplacements théoriques des découpes de la pièce. L'image recueillie par les caméras 11 du drapage réellement effectué peut également être visualisée, superposée à la précédente ou sur un autre écran. On peut encore utiliser des postes de réception d'images vidéo directement reliés aux caméras 11.

On a prévu d'utiliser, pour compléter l'appareillage, un chariot 22 robotisé qui apporte à l'opérateur tous les morceaux nécessaires au drapage de la pièce. Toutefois, ce chariot robotisé ne fait pas partie de l'invention.

On passe maintenant au commentaire de la figure 3. Dans cette réalisation, les projecteurs 10 ne sont pas suspendus au plafond de la pièce où s'effectue le drapage par l'intermédiaire d'une installation de réglage, mais accrochés à une charpente 25 posée sur le sol et formée de poutres métalliques entrecroisées. La charpente 25 comprend en particulier deux travées supérieures 26 parallèles et portant chacune deux profilés 27 sur lesquels un projecteur 10 est vissé de manière réglable en hauteur, horizontalement et en orientation. Les travées 26 peuvent elles aussi être vissées à des emplacements différents d'un cadre supérieur 28 appartenant à la charpente 25 pour offrir une liberté supplémentaire de réglage de la position et de l'orientation des projecteurs 10.

Un cadre médian 29 porte une passerelle roulante 30 qui permet d'accéder facilement aux projecteurs 10 et aux travées 26, et un cadre inférieur 30 porte une mire 32 amovible formée d'un quadrillage. La mire 32 est utilisée pour obtenir une focalisation correcte des images projetées. Dans le cas où les projecteurs 10 comportent une possibilité de réglage électronique, on utilise ce réglage pour affiner les images projetées. Par contre, dans le cas de projecteurs à focale fixe, seul le déplacement de ceux-ci permet d'affiner le réglage de la projection.

Le procédé de réglage consiste à projeter une image du quadrillage, dite "mire-source" et créée par l'ordinateur 20, sur la mire 32, et à déplacer les projecteurs 10 ou à les régler s'ils sont équipés d'un réglage électronique pour que l'image du quadrillage coïncide avec la mire 32 elle-même. La mire 32 est alors retirée, on installe l'outillage 1 sensiblement à son emplacement et on fait correspondre l'image de l'outillage de référence avec l'outillage réel. Le drapage peut alors commencer.

De nombreuses modifications de détail peuvent être apportées à l'appareillage décrit selon les conditions concrètes d'implantation des postes de travail et des appareils disponibles.

## Revendications

1. Appareillage destiné à aider au drapage manuel de pièces par assemblage de plusieurs découpes (M) de tissus ou de rubans de fibres à haute résistance pré-imprégnés de résine durcissable comprenant un outillage (1) de dépose et à contrôler la bonne exécution du drapage, comprenant
- au moins un projecteur vidéo (10) dirigé vers l'outillage (1) et un système de commande (20) apte à faire projeter par les projecteurs (10) des images indiquant la forme, l'emplacement et la texture des découpes à déposer successivement par l'opérateur ;
- un écran de visualisation (21) relié au système de commande et sur lequel apparaissent lesdites images ;
- une caméra (11) dirigée vers l'outillage (1), reliée au système de commande (20) et apte à discerner la forme, la position et la texture des découpes déposées sur l'outillage ;
- et un calculateur intégré dans le système de commande (20), apte à comparer les images issues de la caméra avec des images de référence des découpes déposées sur l'outillage et à arrêter le processus de fabrication si une différence est constatée entre une image de référence et une image d'une découpe en place.

2. Appareillage d'aide au drapage suivant la revendication 1, caractérisé en ce qu'il comprend une mire (32) amovible de réglage, disposée à l'emplacement de l'outillage (1) et en ce que le système de commande (20) est apte à faire projeter une image de calibration sur la mire (32).

3. Appareillage de contrôle de la bonne exécution du drapage réalisé suivant la revendication 1 ou 2, caractérisé en ce que la caméra (11) est une caméra monochrome.

4. Appareillage de contrôle de la bonne exécution du drapage suivant la revendication 3, caractérisé en ce qu'il comprend, de plus, un écran de visualisation (21) des images recueillies par la caméra (11).

## Claims

1. An apparatus for assisting the manual draping of cloth lengths by assembling a plurality of cuttings (M) of high-resistance fabrics or fibre strips pre-impregnated with hardenable resin, comprising a tool (1) for laying and for checking that draping has been carried out correctly, comprising
- at least one video projector (10) directed towards the tool (1) and a control system (20) which is able to project, by way of the projectors (10), images showing the shape, the location and the texture of the cuttings to be laid successively by the operator;
- a viewing screen (21) connected to the control system and on which the said images appear;
- a camera (11) which is directed towards the tool (1), is connected to the control system (20) and is able to detect the shape, the position and the texture of the cuttings laid on the tool;
- and a computer which is integrated into the control system (20) and which is able to compare the images issued from the camera with reference images of the cuttings laid on the tool and is able to stop the manufacturing process if a difference between a reference image and an image of a cutting in position is found.

2. An apparatus for assisting draping according to Claim 1, characterized in that is comprises a removable regulating test pattern (32) which is arranged at the location of the tool (1), and in that the control system (20) is able to project a calibration image on the test pattern (32).

3. An apparatus for checking that draping has been carried out correctly, constructed according to Claim 1 or 2, characterized in that the camera (11) is a monochrome camera.

4. An apparatus for checking that draping has been carried out correctly according to Claim 3, characterized in that it comprises, moreover, a screen (21) for viewing images collected by the camera (11).

## Patentansprüche

1. Hilfsvorrichtung zum manuellen Auflegen von Teilen durch Zusammenfügen von mehreren Schnitten (M) von Geweben oder Bändern von Fasern mit großer widerstandskraft, die durch ein aushärtbares Harz vorimprägniert sind, mit einer Auflageeinrichtung (1) und zum Kontrollieren der guten Ausführung des Auflegens, umfassend
- mindestens einen Videoprojektor (10), der auf die Einrichtung (1) gerichtet ist, und ein Steuersystem (20), das angepaßt ist, um durch die Projektoren (10) Bilder, welche die Form, die Lage und die Textur der nacheinander durch den Betreiber aufzulegenden Schnitte anzuzeigen, zu projezieren;
- einen Anzeigeschirm (21), welcher dem Steuersystem zugeordnet ist und auf welchem die Bilder erscheinen;
- eine Kamera (11), die auf die Einrichtung (1) gerichtet ist und dem Steuersystem (20) zugeordnet und angepaßt ist, um die Form, die Position und die Textur der Schnitte, die auf der Einrichtung abgelegt sind, zu erkennen;
- und einen Rechner, der in das Steuersystem (20) integriert und angepaßt ist, um die Bilder, die von der Kamera ausgegeben werden, mit Bezugsbildern von auf der Einrichtung aufgelegten Schnitten zu vergleichen und um den Herstellungsvorgang anzuhalten, wenn ein Unterschied zwischen einem Bezugsbild und einem Bild eines Schnittes am Ort festgestellt wird.

2. Hilfsvorrichtung zum manuellen Auflegen gemäß Anspruch 1, **dadurch gekennzeichnet, daß** sie ein austauschbares Visiermuster (32) zur Einstellung umfaßt, das am Ort der Einrichtung (1) vorgesehen ist, und daß das Steuersystem (20) geignet ist, ein Kalibrationsbild auf dem Visiermuster (32) zu projizieren.

3. Vorrichtung zur Kontrolle der guten Ausführung der Auflage, die gemäß den Ansprüchen 1 oder 2 ausgeführt ist, **dadurch gekennzeichnet, daß** die Kamera (11) eine monochrome Kamera ist.

4. Vorrichtung zur Konrolle der guten Ausführung der Auflage nach Anspruch 3, **dadurch gekennzeichnet, daß** sie außerdem einen Sichtschirm (21) der von der Kamera (11) empfangenen Bilder umfaßt.
